# FASCICULE DE BREVET EUROPEEN

(11) **EP 3 080 487 B1**
(45) Date de publication et mention de la délivrance du brevet: **03.01.2018**
(21) Numéro de dépôt: 14806037.9
(22) Date de dépôt: 07.11.2014
(51) Int. Cl.: F16H 61/4096, F16H 61/4104, F16H 61/4139, F15B 21/04

(54) **CIRCUIT HYDRAULIQUE COMPORTANT UNE POMPE DE GAVAGE ET UN DISPOSITIF DE PURGE UTILISANT LE VIDE**
HYDRAULISCHE SCHALTUNG MIT LADEPUMPE UND VAKUUMENTLÜFTUNGSVORRICHTUNG
HYDRAULIC CIRCUIT COMPRISING A BOOSTER PUMP AND A BLEEDING DEVICE USING A VACUUM

(30) Priorité: 12.12.2013 FR 1362525
(43) Date de publication de la demande: 19.10.2016
(73) Titulaire: Technoboost, 75116 Paris (FR)
(72) Inventeur: LE DREN, Arnaud, F-91800 Brunoy (FR); ROY, Franck, F-91700 Fleury Merogis (FR)
(74) Mandataire: Rosenberg, Muriel Sylvie
(86) Numéro de dépôt international: PCT/FR2014/052855
(87) Numéro de publication internationale: WO 2015/086933

(56) Documents cités:
- WO-A1-2010/091896
- FR-A1- 2 978 506
- US-A- 5 775 103

## Description

La présente invention concerne un circuit hydraulique comprenant une pompe de gavage et un dispositif de purge, ainsi qu'un véhicule automobile hybride comportant un tel circuit hydraulique, et un procédé de remplissage et de purge de ce circuit hydraulique.

Les circuits hydrauliques comportent généralement une pompe recevant le fluide d'une partie basse pression pour le refouler dans une partie haute pression, et le stocker dans un accumulateur de pression, afin d'alimenter au moins un récepteur comprenant un retour vers la partie basse pression.

Ce type de circuit hydraulique utilisé dans l'industrie ou pour différents types de véhicules, en particulier pour la traction de véhicules automobiles hybrides hydrauliques, peut comporter une partie basse pression maintenue à une pression minimum par un dispositif de gavage, afin d'alimenter la pompe à cette pression minimum pour éviter une cavitation du fluide, notamment avec les débits les plus importants.

Un système de gavage connu, présenté notamment par le document FR-A1-2978506, comporte une pompe de gavage prélevant le fluide dans un réservoir à la pression atmosphérique, dont l'arbre est lié à celui de la pompe haute pression pour être entraîné pas un moteur électrique.

Un autre système de gavage qui peut être utilisé, ne consommant pas d'énergie électrique, comporte un moteur hydraulique alimenté par le circuit haute pression, qui entraîne en rotation une pompe de gavage prélevant le fluide dans un réservoir à la pression atmosphérique, pour le refouler dans le circuit basse pression.

Toutefois ce type de circuit hydraulique relativement complexe, en particulier pour la traction de véhicules hybrides, nécessite généralement un assemblage et des tests dans l'atelier produisant ces circuits afin de s'assurer de son bon fonctionnement. Il faut alors dans cet atelier assembler entièrement le circuit, le remplir et le purger pour effectuer ces tests dans les conditions normales de fonctionnement.

Il faut ensuite dans certains cas, en particulier pour le transport et l'installation dans un véhicule hybride, séparer certains éléments du circuit en débranchant des canalisations, ce qui ouvre ce circuit en introduisant de l'air dedans. Il faut ensuite après son assemblage, compléter le remplissage et effectuer une nouvelle purge.

Toutefois ce type de circuit comportant une pompe de gavage pose des problèmes particuliers de purge des deux circuits haute et basse pression, qui nécessitent habituellement de purger ces deux circuits, puis d'effectuer le remplissage de chaque circuit en prévoyant pour chacun son alimentation en fluide. De même lors d'une intervention en après-vente nécessitant une ouverture de circuit, il faut ensuite réaliser à nouveau cette purge.

La purge de ce type de circuit est relativement complexe, demande un certain temps, et entraîne des coûts ainsi que des risques de défauts qualité.

La présente invention a notamment pour but d'éviter ces inconvénients de la technique antérieure.

Elle propose à cet effet un circuit hydraulique comprenant des équipements comme un système générant la haute pression, un accumulateur de pression et un récepteur, reliés à un circuit haute pression et à un circuit basse pression, et un système de gavage comportant une pompe prélevant le fluide dans un réservoir pour alimenter le circuit basse pression afin d'y maintenir une pression minimum, caractérisé en ce qu'il comporte un moyen de tirage du vide sur le circuit haute pression, un clapet anti-retour de communication disposé entre les circuits basse et haute pression permettant un passage vers la haute pression, et un moyen de blocage de la pompe.

Un avantage de ce circuit hydraulique est que d'une manière simple et efficace, en effectuant le vide par le moyen de tirage avec la pompe bloquée, on réalise en même temps le vide dans le circuit basse pression qui envoie son air dans le circuit haute pression en passant par le clapet anti-retour, la pompe bloquée empêchant une remontée du fluide venant du réservoir dans ce circuit basse pression pendant le tirage du vide.

Une fois ce vide effectué et l'orifice de tirage refermé il faut seulement débloquer la pompe, le vide du circuit basse pression aspirant alors le fluide du réservoir en faisant tourner la pompe qui est libre, le circuit haute pression se remplissant en même temps grâce au clapet anti-retour qui laisse passer le fluide dans ce sens.

Le circuit hydraulique selon l'invention peut de plus comporter une ou plusieurs des caractéristiques suivantes, qui peuvent être combinées entre elles.

Avantageusement, le moyen de tirage du vide comporte un orifice débouchant vers l'extérieur, équipé d'un clapet anti-retour permettant le passage vers l'extérieur.

Selon un mode de réalisation, le moyen de blocage de la pompe de gavage agit directement sur cette pompe.

Selon un autre mode de réalisation, le moyen de blocage de la pompe de gavage agit sur un moteur qui entraîne cette pompe.

En particulier, la pompe de gavage peut être entraînée par un moteur hydraulique.

Dans ce cas, le moteur hydraulique est avantageusement alimenté par le circuit haute pression, et refoule son fluide dans le circuit basse pression.

Avantageusement, le moyen de blocage de la pompe comporte un verrou, un frein ou un crabot.

En particulier, le circuit hydraulique peut comporter un groupe motopropulseur prévu pour réaliser la traction d'un véhicule automobile.

L'invention a aussi pour objet un véhicule automobile hybride comprenant un circuit hydraulique disposant d'un groupe motopropulseur prévu pour la traction de ce véhicule, ce circuit comprenant l'une quelconque des caractéristiques précédentes.

L'invention a de plus pour objet un procédé de purge d'un circuit hydraulique comprenant l'une quelconque des caractéristiques précédentes, qui comporte les étapes suivantes, la pompe est d'abord bloquée avec le dispositif de blocage, son réservoir de puisage étant rempli, puis le vide est tiré par le moyen de tirage, et enfin cette pompe est débloquée.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est un schéma simplifié présentant un circuit hydraulique disposant d'une pompe de gavage ; et
- la figure 2 est un simplifié schéma présentant ce circuit hydraulique équipé du dispositif de purge selon l'invention.

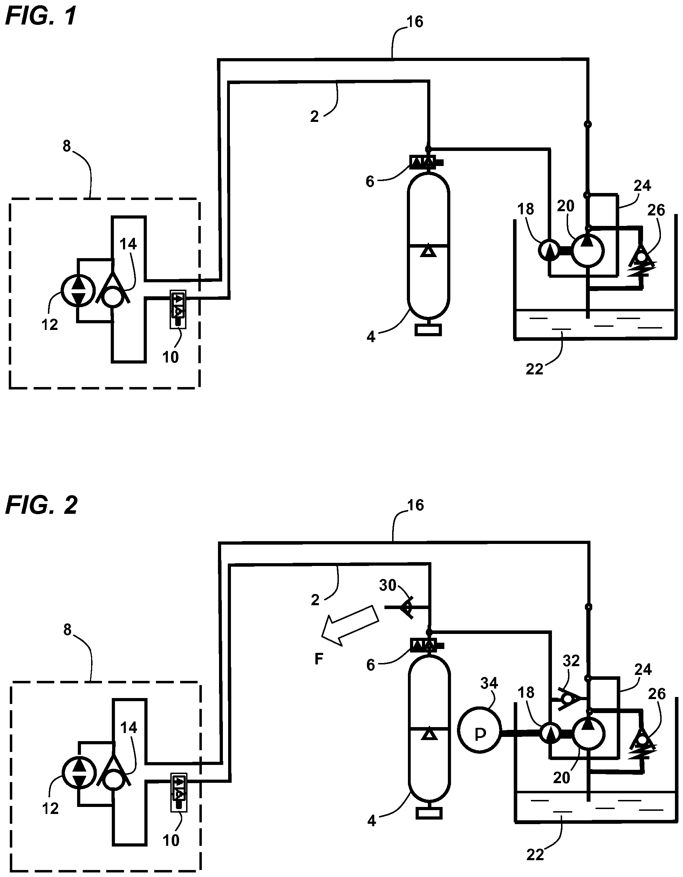

La figure 1 présente un circuit hydraulique prévu pour la traction d'un véhicule hybride, comportant un circuit haute pression 2 disposant d'un accumulateur de pression à gaz 4 qui est relié par une électrovanne 6.

Le circuit haute pression 2 alimente par une deuxième électrovanne 10 un groupe motopropulseur 8, comportant une machine hydraulique 12 de traction du véhicule, qui rejette le fluide dans un circuit basse pression 16. Un clapet anti-retour de sécurité 14 disposé en parallèle du moteur hydraulique 12, permet un passage du fluide uniquement vers le circuit haute pression 2.

La machine hydraulique 12 reliée aux roues motrices, peut fonctionner en moteur en entraînant le véhicule avec un prélèvement du fluide venant de l'accumulateur de pression 4, ou en pompe en freinant le véhicule et en rechargeant cet accumulateur afin de récupérer une énergie cinétique du véhicule.

Le circuit hydraulique peut comporter d'autres éléments non représentés, suivant le type de véhicule hybride, comme une pompe hydraulique entraînée par un moteur thermique.

Le circuit haute pression 2 alimente aussi un moteur hydraulique de petits puissance 18, qui entraîne directement une pompe hydraulique 20 puisant le fluide dans un réservoir à la pression atmosphérique 22, pour le refouler dans le circuit basse pression 16 afin d'y maintenir un minimum de pression permettant d'éviter une cavitation dans ce circuit. Le moteur hydraulique 18 refoule son fluide par une canalisation 24 dans le circuit basse pression 16.

On obtient ainsi une régulation automatique de la basse pression générée par la pompe de gavage 20, qui dépend du différentiel de pression entre les circuits haute et basse pression. Une trop faible pression dans le circuit basse pression 16 augmente la puissance du moteur 18, ce qui remonte la vitesse de la pompe 20 ainsi que le niveau de cette pression. A l'inverse une trop forte pression dans le circuit basse pression 16 diminue la vitesse de cette pompe 20, ce qui redescend ce niveau de pression.

Un clapet de limitation de pression 26 dans le circuit basse pression 16, disposé en parallèle de la pompe de gavage 20, comporte un ressort de tarage qui ouvre ce clapet si la basse pression est nettement trop forte afin de refouler du fluide dans le réservoir 22, ce qui assure une sécurité.

Les deux circuits haute et basse pression 2, 16 sont reliés entre eux par différents éléments comme le moteur hydraulique 18 et le groupe motopropulseur 8, ne permettant pas un libre passage entre ces deux circuits.

La purge d'un tel circuit après son installation ou pour réaliser des opérations de maintenance, est relativement longue et complexe. Il faut en particulier ouvrir chacun des deux circuits 2, 16 pour réaliser un vide dedans, puis les remplir de fluide en mettant chacun en communication avec une réserve contenant ce fluide.

La figure 2 présente le même type de circuit hydraulique, comportant de plus sur le circuit haute pression 2 un orifice de tirage du vide 30 équipé d'un clapet anti-retour de sortie permettant uniquement une sortie de l'air pour faire le vide, présentée par la flèche F, un clapet anti-retour de communication 32 disposé entre les circuits basse 16 et haute pression 2, permettant seulement un passage de la basse vers la haute pression, et un dispositif de blocage 34 de la pompe 20.

L'orifice de tirage du vide 30 peut comporter une double étanchéité comprenant un sas qui évite toute perte, ou une simple étanchéité qui peut laisser perdre quelques gouttes de fluide. Comme cet orifice ne fait que tirer de l'air entraînant peu de perte de charge, sa section de passage peut être réduite.

Le dispositif de blocage 34 de la pompe 20 peut comporter notamment un verrou, un frein ou un crabot, agissant dans cet exemple sur l'axe du moteur hydraulique 18 qui est relié directement à celui de cette pompe. En variante le dispositif de blocage 34 pourrait agir directement sur la pompe 20.

Avantageusement le réservoir 22 comportant des orifices de remplissage et de vidange, est maintenu plein après le remplissage initial effectué pour les tests dans l'atelier produisant les circuits, la pompe de gavage 20 étant bloquée, puis il est installé dans cet état dans le véhicule avec le reste du circuit.

Le procédé de remplissage et de purge du circuit hydraulique complètement installé dans le véhicule, dans l'atelier réalisant l'assemblage final de ces véhicules est le suivant.

La pompe 20 étant bloquée avec le dispositif de blocage 34 et le réservoir de puisage 22 rempli, on effectue un tirage du vide par l'orifice de tirage 30 à l'aide d'un outillage d'atelier comprenant une pompe à vide, le clapet de cet orifice permettant seulement un passage dans ce sens.

L'air est alors aspiré à la fois dans le circuit haute pression 2, et dans le circuit basse pression 16 en passant par le clapet de communication 32 qui permet un passage dans ce sens. On notera que la pompe 20 étant bloquée, elle ne laisse pas passer le fluide venant du réservoir 22 vers le circuit basse pression 16.

Une fois le vide réalisé, on débloque la pompe 20 en agissant sur le dispositif de blocage 34, ce qui permet au vide des deux circuits 2, 16 d'aspirer le fluide venant du réservoir 22, en passant par cette pompe qui peut librement tourner, et par le clapet de communication 32 pour remplir le circuit haute pression. On a alors un remplissage complet et rapide ainsi qu'une purge du circuit hydraulique, qui est effectué en une seule opération.

La pompe peut comporter un petit débit de fuite laissant passer un peu de fluide lors du tirage du vide, ce qui n'est pas gênant dans la mesure où cette pompe étant immergée, on est sûr qu'elle n'aspire pas d'air.

On notera que le clapet anti-retour de l'orifice de tirage 30, restera automatiquement fermé lorsque la pression sera appliquée dans le circuit haute pression 2.

En particulier on peut préparer le circuit hydraulique après le premier assemblage et les tests de fonctionnement, en laissant la pompe hydraulique 20 bloquée avec son réservoir 22 rempli de fluide. On limite ainsi le nombre d'opérations à réaliser lors de l'assemblage final du circuit hydraulique dans le véhicule hybride pour le rendre opérationnel.

On assure avec ce procédé des gains de temps et donc de coût, ainsi qu'une sécurité par le remplissage et la purge nécessitant une seule opération. On évite ainsi des oublis qui pourraient apparaître dans le cas où il faut faire plusieurs opérations pour effectuer le remplissage et la purge complète, et on peut minimiser les opérations finales effectuées dans l'atelier d'assemblage du véhicule.

D'une manière générale, ce procédé de purge peut aussi s'appliquer à des circuits hydrauliques utilisés dans l'industrie ou ailleurs.

## Revendications

1. Circuit hydraulique comprenant un circuit haute pression (2), un circuit basse pression (16), un réservoir (22), des équipements comme un système générant la haute pression, un accumulateur de pression (4) et un récepteur (8), reliés au circuit haute pression (2) et au circuit basse pression (16), et un système de gavage comportant une pompe (20) prélevant le fluide dans le réservoir (22) pour alimenter le circuit basse pression afin d'y maintenir une pression minimum, **caractérisé en ce qu'**il comporte un moyen de tirage du vide (30) sur le circuit haute pression (2), un clapet anti-retour de communication (32) disposé entre les circuits basse (16) et haute pression (2) permettant un passage vers la haute pression, et un moyen de blocage de la pompe (34).

2. Circuit hydraulique selon la revendication 1, **caractérisé en ce que** le moyen de tirage du vide comporte un orifice (30) débouchant vers l'extérieur, équipé d'un clapet anti-retour permettant le passage vers l'extérieur.

3. Circuit hydraulique selon la revendication 1 ou 2, **caractérisé en ce que** le moyen de blocage de la pompe de gavage (34) agit directement sur cette pompe.

4. Circuit hydraulique selon la revendication 1 ou 2, **caractérisé en ce que** le moyen de blocage de la pompe de gavage (34) agit sur un moteur (18) qui entraîne cette pompe (20).

5. Circuit hydraulique selon l'une quelconque des revendications précédentes, **caractérisé en ce que** la pompe de gavage (20) est entraînée par un moteur hydraulique (18).

6. Circuit hydraulique selon la revendication 5, **caractérisé en ce que** le moteur hydraulique (18) est alimenté par le circuit haute pression (2), et refoule son fluide dans le circuit basse pression (16).

7. Circuit hydraulique selon l'une quelconque des revendications précédentes, **caractérisé en ce que** le moyen de blocage de la pompe (34) comporte un verrou, un frein ou un crabot.

8. Circuit hydraulique selon l'une quelconque des revendications précédentes, **caractérisé en ce qu'**il comporte un groupe motopropulseur (8) prévu pour réaliser la traction d'un véhicule automobile.

9. Véhicule automobile hybride comprenant un circuit hydraulique disposant d'un groupe motopropulseur (8) prévu pour la traction de ce véhicule, **caractérisé en ce que** ce circuit est réalisé selon l'une quelconque des revendications précédentes.

10. Procédé de purge d'un circuit hydraulique réalisé selon l'une quelconque des revendications 1 à 8, **caractérisé en ce qu'**il comporte les étapes suivantes, la pompe (20) est d'abord bloquée avec le dispositif de blocage (34), son réservoir de puisage (22) étant rempli, puis le vide est tiré par le moyen de tirage (30), et enfin cette pompe est débloquée.

## Patentansprüche

1. Hydraulischer Kreislauf, der einen Hochdruckkreislauf (2), einen Niederdruckkreislauf (16), einen Behälter (22), Ausstattungen, wie ein System, das einen Hochdruck erzeugt, einen Druckspeicher (4) und einen Empfänger (8) umfasst, die mit dem Hochdruckkreislauf (2) und dem Niederdruckkreislauf (16) verbunden sind, und ein Ladesystem, das eine Pumpe (20) umfasst, die das Fluid aus dem Behälter (22) entnimmt, um den Niederdruckkreislauf zu versorgen, um dort einen Mindestdruck aufrechtzuerhalten, **dadurch gekennzeichnet, dass** er ein Vakuumerzeugungsmittel (30) auf dem Hochdruckkreislauf (2) umfasst, wobei ein Verbindungsrückschlagventil (32), das zwischen dem Niederdruckkreislauf (16) und dem Hochdruckkreislauf (2) angeordnet ist, einen Übergang zum Hochdruck erlaubt, und ein Mittel zum Blockieren der Pumpe (34) umfasst.

2. Hydraulischer Kreislauf nach Anspruch 1, **dadurch gekennzeichnet, dass** das Vakuumerzeugungsmittel eine Öffnung (30) umfasst, die nach außen mündet, die mit einem Rückschlagventil, das das Durchgehen nach außen erlaubt, versehen ist.

3. Hydraulischer Kreislauf nach Anspruch 1 oder 2, **dadurch gekennzeichnet, dass** das Blockierungsmittel der Ladepumpe (34) direkt auf diese Pumpe einwirkt.

4. Hydraulischer Kreislauf nach Anspruch 1 oder 2, **dadurch gekennzeichnet, dass** das Blockierungsmittel der Ladepumpe (34) auf einen Motor (18), der diese Pumpe (20) antreibt, einwirkt.

5. Hydraulischer Kreislauf nach einem der vorhergehenden Ansprüche, **dadurch gekennzeichnet, dass** die Ladepumpe (20) von einem Hydraulikmotor (18) angetrieben wird.

6. Hydraulischer Kreislauf nach Anspruch 5, **dadurch gekennzeichnet, dass** der hydraulische Motor (18) von dem Hochdruckkreislauf (2) versorgt wird und sein Fluid in den Niederdruckkreislauf (16) fördert.

7. Hydraulischer Kreislauf nach einem der vorhergehenden Ansprüche, **dadurch gekennzeichnet, dass** das Blockierungsmittel der Pumpe (34) einen Riegel, eine Bremse oder eine Klaue umfasst.

8. Hydraulischer Kreislauf nach einem der vorhergehenden Ansprüche, **dadurch gekennzeichnet, dass** er ein Motorantriebsaggregat (8) umfasst, das vorgesehen ist, um die Traktion eines Kraftfahrzeugs auszuführen.

9. Hybridkraftfahrzeug, das einen hydraulischen Kreislauf umfasst, der über ein Motorantriebsaggregat (8) verfügt, das für die Traktion dieses Fahrzeugs vorgesehen ist, **dadurch gekennzeichnet, dass** der Kreislauf gemäß einem der vorhergehenden Ansprüche hergestellt ist.

10. Verfahren zum Entleeren eines hydraulischen Kreislaufs, der nach einem der Ansprüche 1 bis 8 hergestellt ist, **dadurch gekennzeichnet, dass** es die folgenden Schritte umfasst, die Pumpe (20) wird zuerst mit der Blockierungsvorrichtung (34) blockiert, ihr Entnahmebehälter (22) wird gefüllt, dann wird das Vakuum von dem Erzeugungsmittel (30) erzeugt, und diese Pumpe wird schließlich entriegelt.

## Claims

1. A hydraulic circuit comprising a high-pressure circuit (2), a low-pressure circuit (16), a tank (22), equipment such as a system generating the high pressure, a pressure accumulator (4) and a receiver (8), connected to the high-pressure circuit (2) and to the low-pressure circuit (16), and a booster system comprising a pump (20) removing the fluid in the tank (22) to supply the low-pressure circuit so as to maintain a minimum pressure there, **characterised in that** it comprises a vacuum drawing means (30) on the high-pressure circuit (2), a non-return communication valve (32) arranged between the low-pressure (16) and high-pressure (2) circuits permitting the passage to the high pressure, and a means for locking the pump (34).

2. The hydraulic circuit according to claim 1, **characterised in that** the vacuum drawing means comprises an orifice (30) leading to the exterior, provided with a non-return valve permitting the passage to the exterior.

3. The hydraulic circuit according to claim 1 or 2, **characterised in that** the locking means of the booster pump (34) acts directly on this pump.

4. The hydraulic circuit according to claim 1 or 2, **characterised in that** the locking means of the booster pump (34) acts on a motor (18) which drives this pump (20).

5. The hydraulic circuit according to any one of the preceding claims, **characterised in that** the booster pump (20) is driven by a hydraulic motor (18).

6. The hydraulic circuit according to claim 5, **characterised in that** the hydraulic motor (18) is supplied by the high-pressure circuit (2), and delivers its fluid into the low-pressure circuit (16).

7. The hydraulic circuit according to any one of the preceding claims, **characterised in that** the means for locking the pump (34) comprise a lock, a brake or a clutch.

8. The hydraulic circuit according to any one of the preceding claims, **characterised in that** it comprises a power-train (8) provided to create the traction of a motor vehicle.

9. A hybrid motor vehicle comprising a hydraulic circuit comprising a power-train (8) provided for the traction of this vehicle, **characterised in that** this circuit is implemented according to any one of the preceding claims.

10. A method of bleeding a hydraulic circuit implemented according to any one of claims 1 to 8, **characterised in that** it comprises the following steps, the pump (20) is first blocked with the locking device (34), its draw-off tank (22) being filled, then the vacuum is drawn by the drawing means (30), and finally this pump is released.
